# EUROPÄISCHE PATENTSCHRIFT

(11) **EP 3 468 003 B1**
(45) Veröffentlichungstag und Bekanntmachung des Hinweises auf die Patenterteilung: **13.01.2021**
(21) Anmeldenummer: 17195068.6
(22) Anmeldetag: 05.10.2017
(51) Int. Cl.: H02K 1/27, B60K 7/00, H02K 7/14, B60B 5/02, B60B 25/00, B60B 21/02, B60B 3/04, B60B 21/12, B60B 23/00, B60B 3/10

(54) **ELEKTROMOTORISCHE ANTRIEBSRADANORDNUNG**
ELECTRIC MOTOR DRIVE WHEEL ASSEMBLY
DISPOSITIF D'ENTRAÎNEMENT À MOTEUR ÉLECTRIQUE

(43) Veröffentlichungstag der Anmeldung: 10.04.2019
(73) Patentinhaber: Muhr und Bender KG, 57439 Attendorn (DE)
(72) Erfinder: Renner, Christoph, 4824 Gosau (AT); Spielvogel, Bernhard, 5271 Moosbach (AT)
(74) Vertreter: Neumann Müller Oberwalleney & Partner Patentanwälte

(56) Entgegenhaltungen:
- WO-A1-2017/157381
- CN-A- 106 696 683
- DE-A1-102008 019 974
- DE-U1-202011 108 560

## Beschreibung

Die vorliegende Erfindung betrifft eine elektromotorische Antriebsradanordnung insbesondere für hybridelektrische Fahrzeuge und Elektrofahrzeuge.

Es ist für elektromotorische Antriebsradanordnungen bekannt, einen Elektromotor als Radnabenmotor in den Innenraum einer Felge zu integrieren. Der Elektromotor weist einen Rotor sowie einen Stator auf. Der Rotor ist mit der Felge verbunden und trägt Magnete, die das magnetische Erregerfeld aufbauen. Der Stator ist drehfest zum Radträger angeordnet und nimmt eine spulenförmige Wicklung auf. Zur Erzeugung des Antriebsmomentes wird elektrischer Strom durch die spulenförmigen Wicklungen des Stators geleitet und somit ein Magnetfeld erzeugt, dass in magnetische Wechselwirkung mit dem Erregerfeld des Rotors tritt. Zur Kraft- und Drehmomentübertragung zwischen Antriebsradanordnung und Fahrbahnbelag wird auf der Felge ein Reifen befestigt. Radnabenmotoren übertragen das Antriebsmoment somit ohne die Zwischenschaltung von Übersetzungsgetrieben sondern treiben Felge und Reifen unmittelbar über den Rotor an.

Zum Betrieb des Radnabenmotors sind Leistungs- und Steuerelektronik notwendig, die entweder direkt in den Aufbau des Radnabenmotors integriert sein können oder aber an oder in der Karosserie platziert sind.

Ein Vorteil des Radnabenmotors gegenüber herkömmlichen Antriebsarchitekturen mit zentralem Antrieb liegt im Wegfall einer Vielzahl von Antriebstrangelementen, wie z.B. Kupplung, Schaltgetriebe, Differentialgetriebe und Gelenkwellen und der damit einhergehenden Verringerung von Übertragungsverlusten. Nachteilig wirkt sich die Erhöhung der sogenannten Ungefederten Massen auf die Fahrsicherheit und den Fahrkomfort des Kraftfahrzeuges aus. Sie sind die Summe der auf die Vertikalbewegung der Radmitte reduzierten Massen aller beim Ein- und Ausfedern mitbewegten Bauteile.

Eine Variante der Radnabenmotoren für Kraftfahrzeuge ist der Typ des Außenläufers. Der Rotor umfasst bei diesem Typ eine ringförmige Struktur, die radial außenliegend um den Stator angeordnet ist und die an ihrem Innenumfang Magnete trägt, die zumeist als Permanentmagnete ausgeführt sind, allerdings auch als Elektromagnet ausgeführt werden können. Zwischen der radial innenliegenden Fläche der Magnete und der radial außenliegenden Fläche des Stators befindet sich der Luftspalt, um eine relative Rotationsbewegung zwischen Rotor und Stator zu ermöglichen. Zur Erzielung eines hohen Wirkungsgrades des Radnabenmotors, wird der Luftspalt möglichst klein und über den Umfang konstant gehalten, da der magnetische Widerstand der Magnetfelder mit größer werdendem Luftspalt ebenfalls zunimmt.

Aus der DE 10 2008 036 560 B4 ist ein Radnabenmotor bekannt, der dem Typ eines Außenläufers entspricht. Der Rotor wird dabei mittels an einer Fahrzeugfelge angeordneter Permanentmagneten gebildet. Die Permanentmagnete werden durch Verkleben oder Vergießen an der Felge fixiert. Dies kann direkt auf dem Felgenkörper oder auf einem Adapterring aus magnetisch leitfähigem Material geschehen. Zur vorherigen Platzierung können in den Körpern Ausnehmungen vorgesehen werden.

Aus der WO 2016/0066769 A1 ist eine Fahrzeugfelge bekannt, die zweiteilig mit Felgenbett und Felgenstern ausgeführt ist und die durch zumindest ein Verbindungselement verbunden sind. Das Felgenbett ist aus einem faserverstärkten Kunststoff und der Felgenstern aus einem metallischen Werkstoff hergestellt. Eine Zwischenschicht verhindert ganz oder teilweise den direkten Kontakt von Felgenbett und Felgenstern, um unerwünschte chemische Prozesse, wie beispielsweise Kontaktkorrosion, der beiden Werkstoffe zu verhindern.

Aus der gattungsbildenden DE 20 2011 108 560 U1 ist ein Radkörper eines Rades eines Elektrofahrzeugs bekannt, umfassend: einen Felgenkörper mit einem Felgenabschnitt zum Aufnehmen eines Reifens und mit einem Speichenabschnitt zum Tragen des Felgenabschnitts auf einem Lager zum drehbaren Lagern des Felgenkörpers auf einer Radachse sowie einen Motoraufnahmekörper zum Aufnehmen eines Elektromotors zum Antreiben des Rades. Der Motoraufnahmekörper umfasst einen äußeren, radial umlaufenden Aufnahmeabschnitt zum Aufnehmen und Befestigen eines äußeren, zur Radachse drehbaren Teils des Elektromotors und einen Übertragungsabschnitt zum Übertragen eines zum Antreiben des Rades auf den Aufnahmeabschnitt wirkenden Drehmomentes auf den Speichenabschnitt, wobei der Übertragungsabschnitt in einem Verbindungsbereich mit dem Speichenabschnitt des Felgenkörpers verbundenen ist, und der Motoraufnahmekörper im Bereich des äußeren Aufnahmeabschnitts zum Felgenabschnitt in radialer Richtung beabstandet ist.

Aus der WO 2017 157 381 A1 ist eine Hybridfelge eines mit einem Radnabenmotor versehenen Rades bekannt. Die Hybridfelge umfasst ein Nichtmetallteil und ein Metallteil, wobei das Rotorgehäuse des Radnabenmotors zumindest teilweise das Metallteil der Hybridfelge bildet.

Der vorliegenden Erfindung liegt die Aufgabe zugrunde, eine elektrische Antriebsradanordnung für ein Kraftfahrzeug bereitzustellen, die durch ihre Bauweise den Wirkungsgrad des Elektromotors erhöht und zu einer Reduktion des Radgewichts führt.

Zur Lösung der Aufgabe wird eine elektromotorische Antriebsradanordnung vorgeschlagen, umfassend: einen mit einem Radträger drehfest verbindbaren Stator, der eine spulenförmige Wicklung trägt, und einen relativ zum Stator drehbar gelagerten Rotor, der in Form einer Fahrzeugfelge gestaltet ist und zumindest teilweise radial außenliegend um den Stator angeordnet ist, wobei die Fahrzeugfelge ein Felgenbett und einen Felgenstern umfasst, die miteinander verbunden sind, wobei das Felgenbett zumindest teilweise aus einem faserverstärktem Kunststoff besteht, und in das Felgenbett mehrere Magnete stoffschlüssig integriert sind, und der Felgenstern zumindest teilweise aus einem metallischen Werkstoff besteht.

Ein Vorteil ist, dass faserverstärkte Kunststoffe eine Kunststoffmatrix und Verstärkungsfasern umfassend gegenüber metallischen Werkstoffen eine wesentlich geringere Dichte bei ähnlicher Zugfestigkeit aufweisen. Durch werkstoffoptimierte Wahl der Geometrie und der Faserorientierung lässt sich somit eine relativ zur Masse hohe Steifigkeit des Felgenbettes erzielen, die einer Ovalisierung der Felge bzw. des Rotors entgegenwirkt, die durch statische und dynamische Anteile der umlaufenden Radaufstandskraft verursacht wird. Der Luftspalt zwischen Stator und Rotor wird dadurch innerhalb eines definierten Fahrzyklus möglichst konstant gehalten, was den mittleren Wirkungsgrad des Radnabenmotors innerhalb des Fahrzyklus erhöht.

Des Weiteren kann durch die Verwendung von faserverstärktem Kunststoff im Bereich des Felgenbettes somit einerseits die Masse des Radnabenmotors als Teil der Ungefederten Masse reduziert werden, andererseits wird das Massenträgheitsmoment um die Rotationsachse des Antriebsrades reduziert. Die Reduktion der Ungefederten Masse führt dabei zu einer Verbesserung der Fahrsicherheits- und Fahrkomforteigenschaften des Fahrzeuges sowie zu einer Reduzierung der benötigten elektrischen Energie innerhalb eines definierten Fahrzyklus durch eine geringere translatorisch zu beschleunigende Masse des Gesamtfahrzeuges. Durch die Reduktion des Massenträgheitsmomentes des Antriebsrades wird die Fahrdynamik sowie die Fahrzeugregelung positiv beeinflusst und die benötigte elektrische Energie innerhalb eines definierten Fahrzyklus wird durch eine geringere rotatorisch zu beschleunigende Masse reduziert.

Erfindungsgemäß ist das Felgenbett zumindest teilweise aus einem faserverstärkten Kunststoff hergestellt, womit die Möglichkeit mit umfasst sein soll, dass das Felgenbett größtenteils oder vollständig aus faserverstärktem Kunststoff hergestellt ist. Zusätzlich zum faserverstärkten Kunststoff können Armierungen aus einem zweiten Werkstoff stoff-, form- oder kraftschlüssig mit dem Felgenbett verbunden bzw. in dieses integriert sein. Diese können beispielweise zur Optimierung der Steifigkeit des Felgenbettes bezüglich der von außen angreifenden Belastungen und einer daraus resultierenden Ovalisierung vorgesehen werden. Insbesondere können die Bereiche der Felge, die im direkten Kontakt mit dem Reifen stehen, aus einem zweiten Werkstoff zum Beispiel einem metallischen Werkstoff ausgeführt sein. Die Armierungen können insbesondere auch die Funktion des Schutzes des faserverstärkten Kunststoffs vor Beschädigungen bespielweise Bordsteinberührungen übernehmen.

Ein weiteres Merkmal der Erfindung ist die stoffschlüssige Integration der Magnete in das Felgenbett. Die Magnete können dabei über den Umfang des Felgenbettes ein- oder mehrreihig verteilt sein. Magnete sind nach Definition alle Körper, die ein Magnetfeld erzeugen und von diesem durchströmt werden, insbesondere Permanent- und Elektromagneten. Stoffschlüssige Verbindungen liegen vor, wenn die Verbindungspartner, erfindungsgemäß die Magnete und der faserverstärkte Kunststoff, durch atomare oder molekulare Kräfte zusammengehalten werden, beispielsweise durch Verkleben, oder verschmolzen werden. Neben dem Stoffschluss kann auch gleichzeitig ein Form- oder Kraftschluss zwischen den Verbindungspartnern vorliegen insbesondere
- können die Magnete vollumfänglich vom faserverstärkten Kunststoff umschlossen sein;
- können die Magnete teilweise vom faserverstärkten Kunststoff umschlossen sein während der nicht vom faserverstärkten Kunststoff umschlossene Teil der Magnete frei liegt;
- können die Magnete teilweise vom faserverstärkten Kunststoff umschlossen sein während der nicht vom faserverstärkten Kunststoff umschlossene Teil der Magnete durch eine Schutzschicht umgeben ist;
- können die Magnete teilweise vom faserverstärkten Kunststoff umschlossen sein während ein Bereich des nicht vom faserverstärkten Kunststoff umschlossenen Teils der Magnete durch eine Schutzschicht umschlossen ist und der andere Bereich frei liegt.

Umschließt, wie oben beschrieben, eine zusätzliche Schutzschicht die Magneten, so kann diese aus der Kunststoffmatrix oder aus einem anderen Material hergestellt sein.

Der Stator ist ein um die Rotationsachse des Antriebsrades angeordnetes Bauteil und weist insbesondere sich nach radial außen erstreckende Statorzähne auf, die jeweils am radial äußeren Ende mit einem Polschuh abschließen und die spulenförmigen Wicklungen tragen können. Alle spulenförmigen Wicklungen des Radnabenantriebs können durch eine Leistungs- und Steuerungselektronik angesteuert werden, die entweder direkt in den Aufbau des Radnabenmotors integriert sein kann oder aber an oder in der Karosserie platziert ist. Der Stator kann ein- oder mehrteilig ausgeführt sein, wobei die einzelnen Teile gegebenenfalls fest miteinander verbunden sein können. Beispielsweise kann der Stator zusätzlich eine Achse umfassen, auf der eine Radnabe drehbar gelagert wird.

Der Stator ist erfindungsgemäß drehfest mit einem Radträger des Fahrzeuges verbindbar, sodass sich die beiden Bauteile in montiertem Zustand nicht relativ zueinander drehen können bzw. ein in den Stator eingeleitetes Drehmoment am Radträger abgestützt wird. Es kann vorgesehen werden, dass zusätzlich zur Fesselung der relativen Rotationsfreiheitsgrade der beiden Bauteile zueinander auch ein oder mehrere relative Translationsfreiheitsgrade der Bauteile zueinander gefesselt sein können.

In einer vorteilhaften Ausführung wird der faserverstärkte Kunststoff aus einer Kunststoffmatrix und einem Faserhalbzeug hergestellt. Das Faserhalbzeug wird durch geeignete textiltechnische Prozesse hergestellt, wie beispielsweise Weben, Flechten, Legen und Sticken oder einer Kombination aus den genannten Verfahren. Die Faserhalbzeuge können einen ein- oder mehrlagig Aufbau aufweisen. Die Ausrichtung der Fasern innerhalb des Faserhalbzeuges kann mono- oder multiaxial sein. Der Lagenaufbau und die Ausrichtung der Fasern können über die Ausdehnung des Halbzeuges variieren. Je nach urformenden Herstellungsprozess des faserverstärkten Kunststoffs können die Halbzeuge trocken verwendet werden oder sie werden vorab mit der Kunststoffmatrix imprägniert. Derartige Faserhalbzeuge erlauben es, dass die lokale mechanische Eigenschaft des resultierenden Bauteils an die lokale Beanspruchung angepasst werden kann, was zu einer Gewichtsoptimierung des Bauteils im Konstruktionsprozess genutzt werden kann.

Gemäß einer ersten Ausführung können die Magneten des Rotors als Permanentmagneten ausgeführt sein. Um leistungsstarke und zugleich kompakte Radnabenmotoren zu bauen, werden Permanentmagneten mit sehr hoher magnetischer Energiedichte verwendet. Mit die höchsten magnetischen Energiedichten werden dabei von Seltenerdmagneten erreicht, die im Wesentlichen Legierungen aus Eisenmetallen und Seltenerdmetallen, die meisten eine sehr hohe Korrosionsanfälligkeit aufweisen, bestehen. Durch die stoffschlüssige Einbettung in das Felgenbett sind die Permanentmagneten zusätzlich vor äußeren Umwelteinflüssen geschützt, sodass die Gefahr von Korrosion der Magnete reduziert wird, die zu einer Leistungsminderung, Materialauflösung oder -zerstörung führen kann. Hierdurch können Prozessschritte zur Korrosionsstabilisierung der Permanentmagnete entfallen und günstigere Permanentmagnete bei gleichbleibender magnetischer Energiedichte verwendet werden. Die Permanentmagneten können eine weitgehend gerade Form aufweisen oder der Kontur des Felgenbettes folgen. Insbesondere können die Permanentmagneten einem extrudierten Kreisringsegment entsprechen und Entformungsschrägen aufweisen. Alternativ kann durch den umfassenden Schutz vor Umwelteinflüssen ein Zielkonflikt zwischen höherer Energiedichte und Korrosionsbeständigkeit bei der Entwicklung neuer Permanentmagnetlegierungen für den Einsatz in Radnabenmotoren umgangen werden. Gemäß einer zweiten Ausführung können die Magnete als Elektromagnete in Form von Spulen aus Metalldrähten gestaltet sein, die in das Faserhalbzeug eingestickt sind.

Eine mögliche Ausführung der elektromotorischen Antriebsradanordnung sieht vor, dass die Permanentmagnete mit dem Faserhalbzeug des faserverstärkten Kunststoffs verbunden sind. Die Permanentmagneten können beispielsweise auf das Halbzeug aufgenäht oder aufgestickt sein. In einer weiteren beispielhaften Ausführung sind die Permanentmagnete in den Lagenaufbau eingenäht oder eingestickt, sodass die Permanentmagnete zwischen zwei Lagen des Faserhalbzeugs angeordnet sind. In einer möglichen Ausführung weisen dazu die Permanentmagnete Verbindungsabschnitte auf, die ein Verbinden ermöglichen, insbesondere ein Vernähen oder Versticken. Beispielsweise können diese Verbindungsabschnitte am Umfang angeordnete Erweiterungen wie Ösen und Füße sein.

Zum Schutz vor Verschmutzung und anderen Umwelteinflüssen kann der Rotor zumindest teilweise ein Motorgehäuse um den Stator bilden. Insbesondere bildet das Felgenbett eine radial außen um den Stator angeordneten Wandung des Motorgehäuses. Darüber hinaus kann der Felgenstern in einer Ausführung eine geschlossene Form aufweisen und so eine Seitenwandung des Motorengehäuses bilden. Insbesondere können hierzu zwischen den Speichen Wandungen vorgesehen sein. Ist der Felgenstern in einem Guss- oder Schmiedeprozess urgeformt, so können die Wandungen beispielsweise durch die Guss- oder Schmiedehaut zwischen den Speichen dargestellt werden, die sonst bei offenen Felgensternen in einem weiteren Arbeitsschritt entfernt wird. Dieser Arbeitsschritt kann bei Ausgestaltung mit einer geschlossenen Seitenwandung eingespart werden und somit eine Stückkostenreduktion bei gleichzeitiger Erweiterung der Bauteilfunktion erreicht werden. In einer weiteren möglichen Ausführung kann eine dem Felgenstern gegenüberliegende Seitenwandung des Motorengehäuses mit dem Felgenbett verbunden oder einteilig mit dem Felgenbett ausgeführt sein, sodass der Stator zwischen dem Felgenstern und der dem Felgenstern gegenüberliegenden Seitenwandung angeordnet ist. Werden die oben beschriebenen Ausführungsformen in Kombination ausgeführt, ergibt sich bezogen auf die Rotationsachse des Antriebsrades ein weitestgehend U-förmiges Motorengehäuse um den Stator.

Zur Abdichtung des Innenraums des Motorengehäuses wird in einer möglichen Ausführungsform zwischen der dem Felgenstern gegenüberliegenden Seitenwandung und dem Stator ein Dichtungselement angeordnet. Insbesondere können Radial- oder Axialwellendichtringe verwendet werden. Durch die Wahl einer nah an der Rotationsachse der Antriebsradanordnung liegenden Dichtungslauffläche wird die relative Umfangsgeschwindigkeit der Dichtungspartner und somit der Verschleiß des Dichtungsmittels verringert. Des Weiteren kann in der Ausführung, in der der Stator eine Radnabe aufweist, der Felgenstern fest mit der Radnabe verbunden und am Stator drehbar gelagert sein. In dieser Ausführung ist der Felgenstern gegenüber der Radnabeabgedichtet. Dazu kann insbesondere jede im Stand der Technik bekannte statische Dichtung, beispielweise eine Flachdichtung, ein O-Ring, eine Dichtungsmasse, oder eine Dichtpressung zwischen Felgenstern und Radnabe vorgesehen sein. Die Radnabe kann ein oder mehrere Verbindungsabschnitte zur Aufnahme von ein oder mehreren Verbindungselementen, insbesondere von Schrauben, aufweisen. Sind diese Verbindungsabschnitte nicht im Wesentlichen in der Form eines Sacklochs ausgeführt sondern im Wesentlichen als Durchgangsbohrung, so können zwischen den Verbindungselementen und der Radnabe oder zwischen den Verbindungselementen und dem Felgenstern weitere Dichtungselemente vorgesehen werden. Eine weitere Ausführung ist dadurch gekennzeichnet, dass das Felgenbett und der Felgenstern kraft- und/oder formschlüssig verbunden sind und zwischen Felgenbett und Felgenstern eine Dichtung, beispielsweise ein Kleber oder eine Dichtmasse, eingebracht ist. Insbesondere kann die Dichtung eine Zwischenschicht sein, die aus unterschiedlichen Materialien aufgebaut ist und die neben der Funktion der Dichtung auch die Funktion der Kraftübertragung zwischen Felgenbett und Felgenstern übernimmt. Insbesondere kann die Dichtung in den Bereichen der Speichen und in den Bereichen der Wandung zwischen diesen unterschiedlich ausgeführt sein. Eine andere mögliche Ausführung sieht vor, dass Felgenbett und Felgenstern stoffschlüssig verbunden sind, beispielsweise durch kleben, und somit eine zusätzliche Abdichtung zwischen den beiden Teilen entfallen kann.

Zur Reduktion des magnetischen Widerstandes und der damit einhergehenden Erhöhung des magnetischen Flusses, können in einer Ausführung ein oder mehrere mit den Magneten umlaufende Metallbänder in das Felgenbett integriert sein.

In einer möglichen Ausführung wird eine Bremsscheibe stoffschlüssig mit dem Felgenstern oder mit dem Felgenbett verbunden, um eine kompakte Bauweise mit reduziertem Montageaufwand zu realisieren.

Bevorzugte Ausführungsbeispiele werden nachstehend anhand der Zeichnungsfiguren erläutert. Hierin zeigt
- Figur 1: eine Ansicht einer erfindungsgemäßen elektromotorischen Radnabenantriebsanordnung von schräg vorne;
- Figur 2: eine Vorderansicht der elektromotorischen Radnabenantriebsanordnung aus Figur 1;
- Figur 3: eine schematische Darstellung eines Stators der Radnabenantriebsordnung aus Figur 1 im Längsschnitt;
- Figur 4: einen Längsschnitt durch die Radnabenanordnung aus Figur 2 entlang der Schnittlinie IV - IV;
- Figur 5: einen Schnitt durch die Radnabenanordnung aus Figur 2 entlang der Schnittlinie V - V;
- Figur 6: a) schematisch einen Teilausschnitt des Felgenbetts aus Figur 4 in vergrößerter Darstellung in einer ersten möglichen Ausgestaltung der Einbettung der Magnete; b) einen Teilausschnitt des Felgenbetts aus Figur 4 in vergrößerter Darstellung in einer zweiten möglichen Ausgestaltung der Einbettung der Magnete; c) einen Teilausschnitt des Felgenbetts aus Figur 4 in vergrößerter Darstellung in einer dritten möglichen Ausgestaltung der Einbettung der Magnete;
- Figur 7: a) einen Permanentmagneten der Radnabenanordnung aus Figur 1 als Einzelheit in perspektivischer Ansicht; b) einen Permanentmagneten in einer abgewandelten Ausführungsform für eine erfindungsgemäße Radnabe.

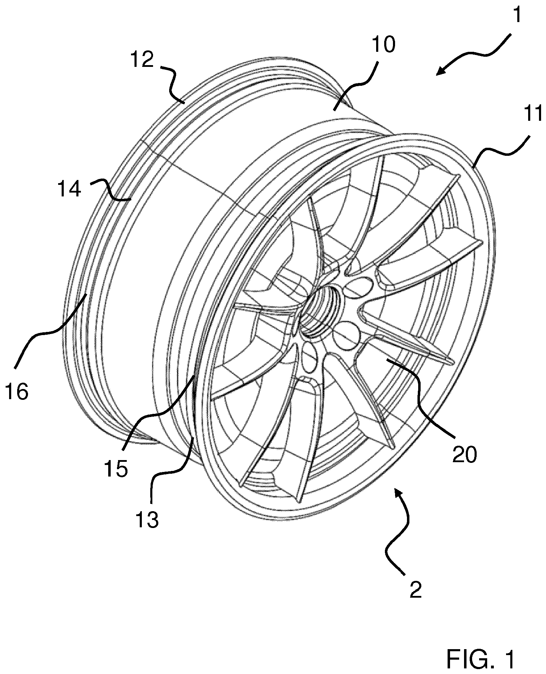

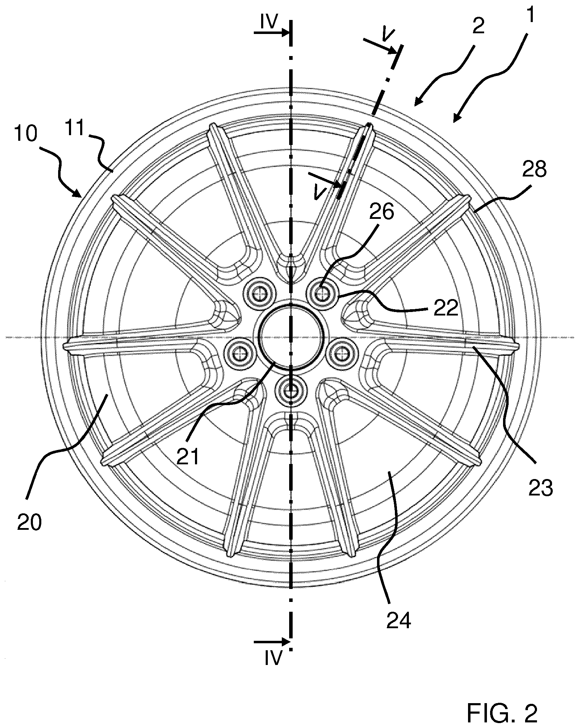

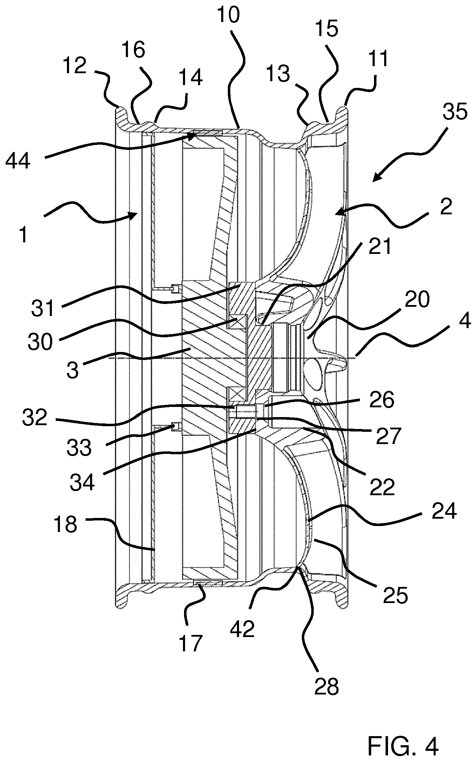

Die Figuren 1 bis 7, die nachstehend gemeinsam beschrieben werden, zeigen eine erfindungsgemäße elektromotorische Antriebsradanordnung 1. Die Antriebradanordnung 1 umfasst einen Rotor 2 und einen Stator 3, die um eine Rotationsachse 4 angeordnet sind. Die Antriebsradanordnung 1 ist über den Stator 3 mit einem in den Figuren nicht dargestellten Radträger verbunden.

Der Rotor 2 ist in Form einer Felge ausgeführt und umfasst ein radial außenliegendes Felgenbett 10 und einen Felgenstern 20, die insbesondere form- und kraftschlüssig miteinander verbunden sind. Zwischen dem Felgenbett 10 und dem Felgenstern 20 ist somit ein umlaufender, gänzlich geschlossener Kontaktbereich 28 gebildet, der über den Umfang in seiner Ausdehnung variieren kann. Das Felgenbett 10 ist weitgehend aus faserverstärktem Kunststoff hergestellt, der ein Faserhalbzeug und eine Kunststoffmatrix umfasst. Der Lagenaufbau und die Faserausrichtung variieren über die Ausdehnung des Halbzeuges, um die mechanischen Eigenschaften des Felgenbetts 10 an die Beanspruchung anzupassen. Insbesondere kann das Faserhalbzeug so aufgebaut sein, dass eine möglichst hohe Steifigkeit gegenüber einer Ovalisierung durch die Radaufstandskräfte erzielt wird. Das Felgenbett 10 kann in jedem geeigneten Urformverfahren für faserverstärkte Kunststoffe hergestellt sein. Je nach Wahl des Herstellungsprozesses sind die Faserhalbzeuge entweder trocken und die Kunststoffmatrix wird nachfolgend eingebracht, beispielsweise bei Harzinjektionsverfahren, oder die Faserhalbzeuge werden vorab mit der Kunststoffmatrix imprägniert, beispielsweise bei Wickelverfahren. Armierungen aus einem anderen Werkstoff, insbesondere einem metallischen Werkstoff, die entweder eine versteifende Wirkung haben oder dem Schutz vor Beschädigungen des faserverstärkten Kunststoffs dienen, können mit dem faserverstärkten Kunststoff kraft-, form-, oder stoffschlüssig verbunden sein. Auf das Felgenbett 10 kann ein in den Figuren nicht dargestellter Reifen montiert werden, sodass eine Wulst des Reifens in der äußeren Felgenschulter 15 und die andere Wulst des Reifens in der inneren Felgenschulter 16 sitzt. Dazu umfasst das Felgenbett 10 ein äußeres Felgenhorn 11 und ein inneres Felgenhorn 12, die den Reifen zu den jeweiligen Seiten des Felgenbetts 10 axial sichern, sowie einem äußeren Hump 13 und einem inneren Hump 14, die ein axiales Verrutschen des Reifens nach jeweils Innen unter der Belastung einer Kurvenfahrt verhindern. Die oben genannten Bereiche, die der axialen Sicherung des Reifens dienen, können insbesondere durch metallische Armierungen verstärkt sein.

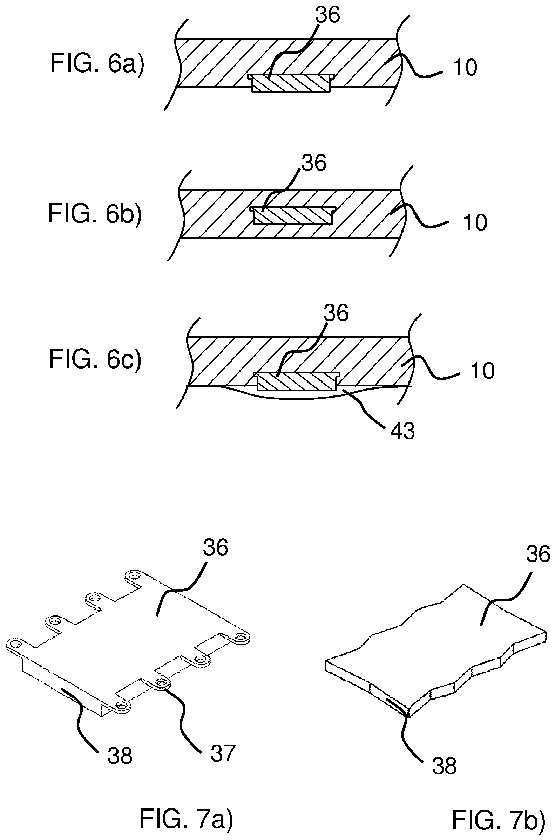

Im Felgenbett 10 sind mehrere Magnete 17, die das Erregerfeld der elektromotorischen Antriebsradanordnung 1 erzeugen, stoffschlüssig integriert. Die Magnete 17 sind in den dargestellten Ausführungsbeispielen als Permanentmagnete 36 gestaltet. Alternativ können die Magnete 17 als Elektromagnete in Form einer Spule aus Metalldrähten ausgeführt sein. Figur 6 a) zeigt schematisch eine erste Ausführung der Integration der Permanentmagnete 36 in das Felgenbett 10, bei der die Permanentmagnete 36 teilweise vom faserverstärkten Kunststoff umschlossen sind, während der nicht vom faserverstärkten Kunststoff umschlossene Teil der Magnete frei liegt. Figur 6 b) zeigt schematisch eine zweite Ausführung der Integration der Permanentmagnete 36 in das Felgenbett 10, bei der die Permanentmagnete 36 vollumfänglich vom faserverstärkten Kunststoff umschlossen sind. Figur 6 c) zeigt schematisch eine dritte Ausführung der Integration der Permanentmagnete 36 in das Felgenbett 10, bei der die Permanentmagnete 36 teilweise vom faserverstärkten Kunststoff umschlossen sind, während der nicht vom faserverstärkten Kunststoff umschlossene Teil der Permanentmagnete 36 durch eine Schutzschicht 43 umgeben ist. Die Schutzschicht 43 kann entweder aus dem faserverstärkten Kunststoff, der Kunststoffmatrix oder einem anderen Material bestehen. Die dargestellten Ausführungen sind insbesondere derart ausgestaltet, dass die Permanentmagnete 36 weitgehend vor äußeren Umwelteinflüssen, die zu Korrosion führen können, geschützt sind.

Für die stoffschlüssige Integration der Permanentmagnete 36 in das Felgenbett 10 können diese mit dem Faserhalbzeug verbunden werden. Dies kann insbesondere je nach Ausgestaltung des Lagenaufbaus des Faserhalbzeuges durch ein Aufnähen oder Aufsticken auf das Faserhalbzeug beziehungsweise durch ein Einnähen oder Einsticken in den Lagenaufbau des Faserhalbzeugs erfolgen. Die Permanentmagnete 36 weisen dazu Verbindungsabschnitte 37 in Form einer Öse auf, wie in Figur 7 a) dargestellt. Für eine optimierte Führung des Herstellungsprozesses können die Permanentmagnete 36 Entformungsschrägen 38 aufweisen. Eine alternative Ausführung der Permanentmagnete 36 bei der auf die Verbindungsabschnitte 37 verzichtet wird, stellt Figur 7 b) dar. Insbesondere wird diese Variante zwischen zwei oder mehr Lagen des Faserhalbzeugs eingebracht. Die in den beiden Figuren dargestellten Ausführungen der Permanentmagneten 36 weisen eine weitgehend gerade Form auf. Die Permanentmagnete 36 können insbesondere auch in einer der Kontur des Felgenbetts 10 folgenden Form ausgeführt sein, das heißt einem extrudierten Kreisringsegment entsprechen. Eine mögliche Ausführung sieht vor, dass zur Reduzierung des magnetischen Widerstands radial außen ein oder mehrere mit den Magneten 17 umlaufende Metallbänder stoffschlüssig in das Felgenbett integriert sind.

Der Felgenstern 20 besteht aus einem metallischen Werkstoff, wobei in einer erfindungsgemäßen Ausgestaltung einzelne Abschnitte aus anderen Materialien hergestellt sein können. Der Felgenstern 20 umfasst eine mittig positionierte Radaufnahme 21, die eine Radnabe 31 zentriert aufnehmen kann. Die Radaufnahme 21 wird radial außenliegend von insbesondere 5 Befestigungslöchern 22 umgeben, ohne das die Anzahl der Befestigungslöcher 22 hierauf eingeschränkt ist. Durch die Befestigungslöcher 22 können Verbindungselemente 26, insbesondere Schrauben, gesteckt werden und in Verbindungsabschnitten 32, insbesondere Gewinde, die in der Radnabe 31 vorgesehen sind, fixiert werden, sodass der Felgenstern 20 und die Radnabe 31 fest miteinander verbunden sind. Weiter umfasst der Felgenstern 20 mehrere Speichen 23, die sich von der Radaufnahme 22 weitgehend radial nach außen bis zum Kontaktbereich 28 erstrecken, wobei die Speichen 23 insbesondere eine gerade sowie eine geschwungen Form aufweisen können. Die Speichen 23 können insbesondere auch mehrstrebig beispielsweise als Y-Speiche ausgeführt sein. Zwischen den Speichen 23 erstrecken sich radial und in Umfangsrichtung Wandungen 24, sodass der Felgenstern 20 eine geschlossene Form aufweist. Dies kann insbesondere dadurch erreicht werden, dass die Guss- oder Schmiedehaut, die sich beim Urformen durch Gießen oder Schmieden des Felgensterns 20 zwischen den Speichen 23 bildet, nicht entfernt wird. Die Speichen 23 und die Wandungen 24 können derart ausgeführt sein, dass sich eine geschlossene Radscheibe ergibt.

Der Stator 3 ist ein um die Rotationsachse 4 angeordnetes Bauteil, das teilweise radial außenliegend vom Rotor, insbesondere vom Felgenbett 10, umgeben wird. Der Stator 3 umfasst mehrere über den Umfang verteilte und nach radial außen laufende Statorzähne 5 mit spulenförmigen Wicklungen, die in der Abbildung vereinfachend nicht dargestellt sind. Die spulenförmigen Wicklungen sind mit einer nicht dargestellten Leistungs- und Steuerelektronik verbunden und erzeugen bei Stromzufuhr ein Magnetfeld. Das Magnetfeld tritt mit dem Erregerfeld in magnetische Wechselwirkung und baut so das Motordrehmoment der Antriebsradanordnung 1 auf. Zur Optimierung des magnetischen Flusses sind die außenliegenden Enden der Statorzähne 5 als Polschuhe 6 ausgestaltet, die zu den Magneten 17 des Rotors 2 radial innenliegend angeordnet sind. Zwischen den Polschuhen 6 und den Magneten 17 befindet sich der Luftspalt 44, der für einen hohen Wirkungsgrad des Elektromotors im Fahrbetrieb möglichst klein und konstant gehalten werden muss. Dies kann durch eine hohe Steifigkeit des Felgenbetts 10 gegenüber einer Ovalisierung durch die Radaufstandskraft erreicht werden. Die Steifigkeit kann beispielsweise durch eine entsprechende, zuvor beschriebene, Auslegung des Faserhalbzeugs oder durch Armierungen im faserverstärkten Kunststoff optimiert werden.

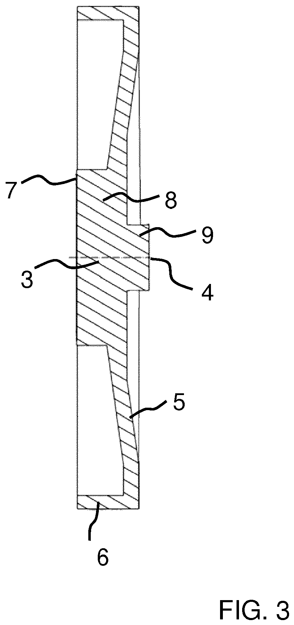

Weiter umfasst der Stator 3 einen Mittenbereich 8, der auf einer Seite - in Figur 3 auf der linken Seite - einen Verbindungsbereich 7 zum Radträger des Fahrzeuges aufweist. Über den Verbindungsbereich 7 ist der Stator 3 drehfest mit dem Radträger verbunden, sodass alle relativen Rotationsfreiheitsgrade und zumindest ein relativer translatorischer Freiheitsgrad zwischen den Bauteilen gefesselt sind und somit ein in den Stator 3 eingeleitetes Drehmoment am Radträger abgestützt wird. Auf der Gegenüberliegenden Seite - in Figur 3 auf der rechten Seite - weist der Stator 3 einen Zapfen 9 auf, der ein drehbares Lagerelement aufnehmen kann. Der Stator 3 ist in einer einteiligen Ausführung gezeigt. Alternativ kann der Stator 3 auch mehrteilig ausgeführt sein, um beispielsweise den Verbindungsbereich 7 und den Zapfen 9 zu integrieren. Auf dem Zapfen 9 ist ein Radlager 30 befestigt, dass die Radnabe 31 drehbar lagert. Die Radnabe 31 ist ihrerseits wie zuvor beschrieben mittels Verbindungselementen 26 mit dem Felgenbett 10 fest verbunden.

Das Felgenbett 10 ist an seiner radial innenliegenden Seite stoffschlüssig mit einer Seitenwandung 18 eines Motorgehäuses 35 verbunden, sodass der Stator 3 zwischen der Seitenwandungen 18 und dem Felgenstern 20 angeordnet ist. Die Seitenwandung 18 kann dabei entweder aus dem gleichen Material wie das Felgenbett 10 hergestellt sein oder aber aus einem anderen Werkstoff bestehen. Da der Felgenstern 20 in einer geschlossenen Form aus Speichen 23 und Wandungen 24 ausgeführt ist, übernimmt der Felgenstern 20 die Funktion einer zweiten Seitenwandung 25 des Motorgehäuses 35.

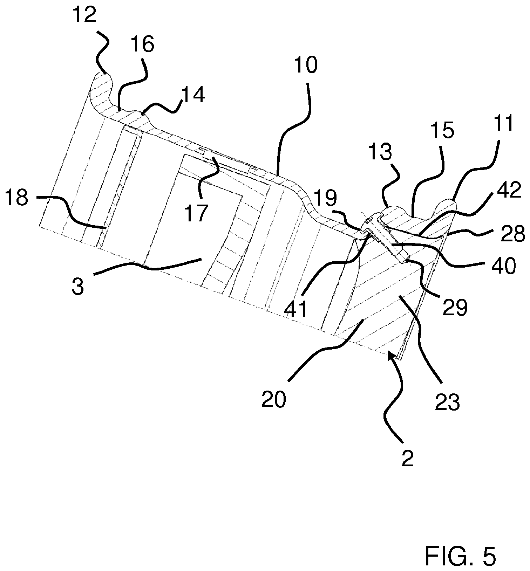

Die Seitenwandung 18, das Felgenbett 10 und der Felgenstern 20 bilden somit zusammen das Motorgehäuse 35, das gegenüber äußeren Umwelteinflüssen abgedichtet wird. Dazu ist zwischen einem radial innenliegenden Ende der Seitenwandung 18 und dem Stator ein Dichtungselement 33 vorgesehen. Das Dichtungselement 33 kann insbesondere ein Radialwellendichtring oder ein Axialwellendichtring sein. Der Durchmesser der Dichtlauffläche ist möglichst klein gewählt, sodass der Verschleiß am Dichtungselement 33, bei ausreichendem Bauraum für die Verbindung zwischen Stator 3 und dem Radträger des Fahrzeuges, reduziert werden kann. Die Seitenwandung 18 und das Felgenbett 10 sind stoffschlüssig miteinander verbunden, sodass zwischen den beiden Bauteilen eine Abdichtung vorliegt. Der Felgenstern 20 und das Felgenbett 10 sind kraft- und formschlüssig verbunden. Wie in Figur 5 dargestellt, werden hierzu Verbindungselemente 40, insbesondere Schrauben, die in Buchsen 41 eingefasst sind, durch Öffnungen 19 im Felgenbett 10 geführt und in Verbindungsabschnitten 29 des Felgensterns 20, insbesondere Sacklöcher mit einem Gewindeteil, im Bereich der Speichen 23 fixiert. Die Verbindungselemente 40 können insbesondere mit dem Felgenbett 10, dem Felgenstern 10 und den Buchsen 41 verklebt sein. Die Buchsen 41 übernehmen eine Dichtfunktion und nehmen Scherkräfte auf, die durch die Kraft- und Drehmomentübertragung auf die Verbindungselemente 40 wirken. Insbesondere können die Buchsen 41 dazu mit dem Felgenbett 10 und dem Felgenstern 20 strukturell verklebt sein und beispielsweise aus einem Elastomer-Werkstoff hergestellt sein. Im Kontaktbereich 28 ist zwischen Felgenbett 10 und Felgenstern 20 eine Dichtung 42 vorgesehen, die im Bereich der Speichen 23 eine Zwischenschicht mit Funktionsbereichen zur Kraft- und Drehmomentübertragung sowie zur Abdichtung aufweist. Die Zwischenschicht kann des Weiteren die beiden Bauteile so entkoppeln, dass es Kontaktkorrosion zwischen den unterschiedlichen Werkstoffen von Felgenbett 10 und Felgenstern 20 verhindert wird. Im Bereich der Wandungen 24 ist der Kontaktbereich 28 schmaler ausgestaltet als im Bereich der Speichen 23 und die Dichtung 42 ist aus einer Dichtmasse hergestellt, sodass in diesem Bereich weitgehend nur eine Dichtwirkung und nebengeordnet eine Kraft- und Drehmomentübertragung resultiert. Die Zwischenschicht und die Dichtmasse bilden zusammen eine vollumfängliche Dichtung im Kontaktbereich 28. Alternativ kann der Kontaktbereich 28 im Bereich der Wandungen 24 breiter ausgestaltet sein, sodass vollumfänglich sowohl eine Dichtwirkung als auch eine Kraft- und Drehmomentübertragung realisiert wird. Zwischen Felgenstern 20 und Radnabe 31 ist als Dichtung 34 eine Dichtpressung realisiert. Durch die Verbindungselemente 26 wird eine Vorspannkraft erzeugt, sodass die Radnabe 31 und der Felgenstern 20 einen festen Kraftschluss aufweisen. Die Vorspannkraft der Verbindungselemente 26 ist dabei so groß gewählt, dass die resultierende Pressung zwischen Radnabe 31 und Felgenstern 20 eine abdichtende Wirkung erzielt. Die Verbindungsabschnitte 32 an der Radnabe 31 sind als Durchgangsbohrung mit Gewinde ausgestaltet. Zur Abdichtung ist daher zwischen dem Verbindungbereich 32 und dem Verbindungselement 26 eine weitere Dichtung 27 vorgesehen. Alternativ können die Verbindungsabschnitte 32 als Sackloch ausgeführt sein, sodass auf die Dichtung 27 verzichtet werden kann.

Eine mögliche Ausführung sieht vor, dass eine Bremsscheibe drehfest mit dem Felgenbett 10 oder dem Felgenstern 20 verbunden ist. Die drehfeste Verbindung kann beispielsweise durch Stoffschluss zwischen der Bremsscheibe und dem Felgenbett 10 bzw. dem Felgenstern 20 ausgestaltet sein.

### Bezugszeichenliste

- 1: Antriebsradanordnung
- 2: Rotor
- 3: Stator
- 4: Rotationsachse
- 5: Statorzahn
- 6: Polschuh
- 7: Verbindungsbereich
- 8: Mittenbereich
- 9: Zapfen
- 10: Felgenbett
- 11: Äußeres Felgenhorn
- 12: Inneres Felgenhorn
- 13: Äußerer Hump
- 14: Innerer Hump
- 15: Äußerer Felgenschulter
- 16: Innerer Felgenschulter
- 17: Magnet
- 18: Seitenwandung
- 19: Öffnung
- 20: Felgenstern
- 21: Radaufnahme
- 22: Befestigungsloch
- 23: Speiche
- 24: Wandung
- 25: Seitenwandung
- 26: Verbindungselement
- 27: Dichtung
- 28: Kontaktbereich
- 29: Verbindungsbereich
- 30: Radlager
- 31: Radnabe
- 32: Verbindungsabschnitt
- 33: Dichtungselement
- 34: Dichtung
- 35: Motorgehäuse
- 36: Permanentmagnet
- 37: Verbindungsabschnitt
- 38: Entformungsschräge
- 39: Metallband
- 40: Verbindungselement
- 41: Buchse
- 42: Dichtung
- 43: Schutzschicht
- 44: Luftspalt

## Patentansprüche

1. Elektromotorische Antriebsradanordnung für ein Kraftfahrzeug, umfassend:
einen mit einem Radträger drehfest verbindbaren Stator (3), der eine spulenförmige Wicklung trägt, und einen relativ zum Stator (3) drehbar gelagerten Rotor (2), der in Form einer Fahrzeugfelge gestaltet ist und zumindest teilweise radial außenliegend um den Stator (3) angeordnet ist, wobei die Fahrzeugfelge ein Felgenbett (10), das zumindest teilweise aus einem faserverstärktem Kunststoff besteht, und einen Felgenstern (20) umfasst, die miteinander verbunden sind,
**dadurch gekennzeichnet, dass**
in das Felgenbett (10) mehrere Magnete (17) stoffschlüssig integriert sind, und
der Felgenstern (20) zumindest teilweise aus einem metallischen Werkstoff besteht.

2. Elektromotorische Antriebsradanordnung nach Anspruch 1,
**dadurch gekennzeichnet, dass**
der faserverstärkte Kunststoff des Rotors (2) aus einer Kunststoffmatrix und einem Faserhalbzeug hergestellt ist.

3. Elektromotorische Antriebsradanordnung nach einem der Ansprüche 1 oder 2,
**dadurch gekennzeichnet, dass**
die Magnete des Rotors (2) als Permanentmagnete (36) ausgeführt sind.

4. Elektromotorische Antriebsradanordnung nach Anspruch 3,
**dadurch gekennzeichnet, dass**
die Permanentmagnete (36) mit dem Faserhalbzeug verbunden sind.

5. Elektromotorische Antriebsradanordnung nach Anspruch 4,
**dadurch gekennzeichnet, dass**
die Permanentmagnete (36) mehrere Verbindungsabschnitte (37) zum Verbinden mit dem Faserhalbzeug aufweisen.

6. Elektromotorische Antriebsradanordnung nach Anspruch 2,
**dadurch gekennzeichnet, dass**
die Magnete (17) in Form von Spulen aus Metalldrähten gestaltet sind, die in das Faserhalbzeug eingestickt sind.

7. Elektromotorische Antriebsradanordnung nach einem der Ansprüche 1 bis 6,
**dadurch gekennzeichnet, dass**
der Rotor (2) zumindest teilweise ein Motorgehäuse (35) um den Stator (3) bildet.

8. Elektromotorische Antriebsradanordnung nach Anspruch 7,
**dadurch gekennzeichnet, dass**
der Felgenstern (20) eine geschlossene Form aufweist und eine Seitenwandung (25) des Motorgehäuses (35) bildet.

9. Elektromotorische Antriebsradanordnung nach einem der Ansprüche 1 bis 8,
**dadurch gekennzeichnet, dass**
der Stator (3) eine Radnabe (31) aufweist, die mit dem Felgenstern (20) fest verbunden und am Stator (3) drehbar gelagert ist, wobei der Felgenstern (20) gegenüber der Radnabe (31) abgedichtet ist.

10. Elektromotorische Antriebsradanordnung nach einem der Ansprüche 7 bis 9,
**dadurch gekennzeichnet, dass**
eine dem Felgenstern (20) gegenüberliegende Seitenwandung (18) des Motorengehäuses (35) mit dem Felgenbett (10) verbunden oder mit dem Felgenbett (10) einteilig ausgeführt ist, sodass der Stator (3) zwischen dem Felgenstern (20) und der dem Felgenstern (20) gegenüberliegenden Seitenwandung (18) angeordnet ist.

11. Elektromotorische Antriebsradanordnung nach Anspruch 10,
**dadurch gekennzeichnet, dass**
zwischen der dem Felgenstern (20) gegenüberliegenden Seitenwandung (18) und dem Stator (3) ein Dichtungselement (33) angeordnet ist.

12. Elektromotorische Antriebsradanordnung nach einem der Ansprüche 1 bis 11,
**dadurch gekennzeichnet, dass**
das Felgenbett (10) und der Felgenstern (20) kraft- und/oder formschlüssig verbunden sind und zwischen dem Felgenbett (10) und dem Felgenstern (20) eine Dichtung (42) vorgesehen ist.

13. Elektromotorische Antriebsradanordnung nach einem der Ansprüche 1 bis 11,
**dadurch gekennzeichnet, dass**
das Felgenbett (10) und der Felgenstern (20) stoffschlüssig verbunden sind.

14. Elektromotorische Antriebsradanordnung nach einem der Ansprüche 1 bis 13,
**dadurch gekennzeichnet, dass**
ein oder mehrere mit den Magneten (17) umlaufende Metallbänder stoffschlüssig in das Felgenbett (10) integriert sind.

15. Elektromotorische Antriebsradanordnung nach einem der Ansprüche 1 bis 14,
**dadurch gekennzeichnet, dass**
eine Bremsscheibe mit dem Felgenstern (20) oder mit dem Felgenbett (10) drehfest verbunden ist.

## Claims

1. Electromotive drive wheel arrangement for a motor vehicle, comprising:
a stator (3) connectable in a rotationally fixed manner to a wheel carrier and carrying a coil-like winding, and a rotor (2) rotatably supported relative to the stator (3) and configured in the form of a wheel rim and arranged at least partially radially outside around the stator (3), wherein the wheel rim comprises a rim base (10) consisting at least partially of a fibre-reinforced plastic and a rim star (20), connected to each other,
**characterised in that**
several magnets (17) are integrated in the rim base (10) by a material connection, and
the rim star (20) consists at least partially of a metal material.

2. Electromotive drive wheel arrangement according to claim 1,
**characterised in**
**that** the fibre-reinforced plastic of the rotor (2) is made from a plastic matrix and a semi-finished fibre product.

3. Electromotive drive wheel arrangement according to any of claims 1 or 2,
**characterised in**
**that** the magnets of the rotor (2) are formed as permanent magnets (36).

4. Electromotive drive wheel arrangement according to claim 3,
**characterised in**
**that** the permanent magnets (36) are connected to the semi-finished fibre product.

5. Electromotive drive wheel arrangement according to claim 4,
**characterised in**
**that** the permanent magnets (36) have several connection portions (37) for connecting to the semi-finished fibre product.

6. Electromotive drive wheel arrangement according to claim 2,
**characterised in**
**that** the magnets (17) are configured in the form of coils made from metal wires, embroidered into the semi-finished fibre product.

7. Electromotive drive wheel arrangement according to any of claims 1 to 6,
**characterised in**
**that** the rotor (2) forms at least partially a motor housing (35) around the stator (3).

8. Electromotive drive wheel arrangement according to claim 7,
**characterised in**
**that** the rim star (20) has a closed shape and forms a side wall (25) of the motor housing (35).

9. Electromotive drive wheel arrangement according to any of claims 1 to 8,
**characterised in**
**that** the stator (3) has a wheel hub (31), which is fixed to the rim star (20) and rotatably supported on the stator (3), wherein the rim star (20) is sealed relative to the wheel hub (31).

10. Electromotive drive wheel arrangement according to any of claims 7 to 9,
**characterised in**
**that** a side wall (18) of the motor housing (35) arranged opposite to the rim star (20), is connected to the rim base (10) or formed integrally with the rim base (10), so that the stator (3) is arranged between the rim star (20) and the side wall (18) arranged opposite to the rim star (20).

11. Electromotive drive wheel arrangement according to claim 10,
**characterised in**
**that** a sealing element (33) is arranged between the side wall (18) arranged opposite to the rim star (20), and the stator (3).

12. Electromotive drive wheel arrangement according to any of claims 1 to 11,
**characterised in**
**that** the rim base (10) and the rim star (20) are connected to each other in a force-locking and/or form-locking manner, and that a seal (42) is provided between the rim base (10) and the rim star (20).

13. Electromotive drive wheel arrangement according to any of claims 1 to 11,
**characterised in**
**that** the rim base (10) and the rim star (20) are materially connected to each other.

14. Electromotive drive wheel arrangement according to any of claims 1 to 13,
**characterised in**
**that** one or several metal strips, rotating with the magnets (17), are integrated by a material connection in the rim base (10).

15. Electromotive drive wheel arrangement according to any of claims 1 to 14,
**characterised in**
**that** a brake disc is rotationally fixedly connected to the rim star (20) or the rim base (10).

## Revendications

1. Ensemble d'entraînement à moteur électrique pour un véhicule automobile, comprenant :
un stator (3) susceptible d'être assemblé de manière solidaire en rotation avec un support de roue, qui porte un enroulement en forme de bobine, et un rotor (2) logé en rotation par rapport au stator (3) qui est conçu sous la forme d'une jante de véhicule et qui est placé au moins en partie sur l'extérieur en direction radiale autour du stator (3), la jante de véhicule comprenant une base de jante (10), qui est constituée au moins en partie d'une matière plastique renforcée par fibres et une étoile de jante (20) qui sont assemblées l'une à l'autre,
**caractérisé en ce que**
plusieurs aimants (17) sont intégrés par matière dans la base de jante (10),
l'étoile de jante (20) est constituée au moins en partie d'une matière métallique.

2. Ensemble d'entraînement à moteur électrique selon la revendication 1,
**caractérisé en ce que**
la matière plastique renforcée par fibre du rotor (2) est fabriquée à partir d'une matrice en matière plastique et d'un produit semi-fini fibreux.

3. Ensemble d'entraînement à moteur électrique selon l'une quelconque des revendications 1 ou 2,
**caractérisé en ce que**
les aimants du rotor (2) sont réalisés sous la forme d'aimants permanents (36).

4. Ensemble d'entraînement à moteur électrique selon la revendication 3,
**caractérisé en ce que**
les aimants permanents (36) sont assemblés avec le produit semi-fini fibreux.

5. Ensemble d'entraînement à moteur électrique selon la revendication 4,
**caractérisé en ce que**
les aimants permanents (36) comportent plusieurs segments d'assemblage (37) pour l'assemblage avec le produit semi-fini fibreux.

6. Ensemble d'entraînement à moteur électrique selon la revendication 2,
**caractérisé en ce que**
les aimants (17) sont conçus sous la forme de bobines en fils métalliques qui sont brodées dans le produit semi-fini fibreux.

7. Ensemble d'entraînement à moteur électrique selon l'une quelconque des revendications 1 à 6,
**caractérisé en ce que**
le rotor (2) forme au moins en partie un carter de moteur (35) autour du stator (3).

8. Ensemble d'entraînement à moteur électrique selon la revendication 7,
**caractérisé en ce que**
l'étoile de jante (20) présente une forme fermée et
forme une paroi latérale (25) du carter de moteur (35) .

9. Ensemble d'entraînement à moteur électrique selon l'une quelconque des revendications 1 à 8,
**caractérisé en ce que**
le stator (3) comporte un moyeu de roue (31) qui est fixement assemblé avec l'étoile de jante (20) et qui est logé de manière rotative sur le stator (3), l'étoile de jante (20) étant étanchéifié par rapport au moyeu de roue (31).

10. Ensemble d'entraînement à moteur électrique selon l'une quelconque des revendications 7 à 9,
**caractérisé**
**en ce qu'**une paroi latérale (18) du carter de moteur (35) opposée à l'étoile de jante (20) est assemblée avec la base de jante (10) ou est réalisée en monobloc avec la base de jante (10), de sorte que le stator (3) soit placé entre l'étoile de jante (20) et la paroi latérale (18) opposée à l'étoile de jante (20).

11. Ensemble d'entraînement à moteur électrique selon la revendication 10,
**caractérisé**
**en ce qu'**entre la paroi latérale (18) opposée à l'étoile de jante (20) et le stator (3) est placé un élément d'étanchéité (33).

12. Ensemble d'entraînement à moteur électrique selon l'une quelconque des revendications 1 à 11,
**caractérisé en ce que**
la base de jante (10) et l'étoile de jante (20) sont assemblées par complémentarité de force ou de forme et **en ce qu'**entre la base de jante (10) et l'étoile de jante (20) est prévu un joint (42).

13. Ensemble d'entraînement à moteur électrique selon l'une quelconque des revendications 1 à 11,
**caractérisé en ce que**
la base de jante (10) et l'étoile de jante (20) sont assemblées par matière.

14. Ensemble d'entraînement à moteur électrique selon l'une quelconque des revendications 1 à 13,
**caractérisé**
**en ce qu'**une ou plusieurs bandes métallique périphériques avec les aimants (17) sont intégrées par matière dans la base de jante (10).

15. Ensemble d'entraînement à moteur électrique selon l'une quelconque des revendications 1 à 14,
**caractérisé**
**en ce qu'**un disque de frein est assemblé de manière solidaire en rotation avec l'étoile de jante (20) ou avec la base de jante (10).
